(19) Europäisches Patentamt
European Patent Office
Office européen des brevets

(11) **EP 1 930 069 B1**

(12) **EUROPEAN PATENT SPECIFICATION**

(45) Date of publication and mention
of the grant of the patent:
**15.09.2010 Bulletin 2010/37**

(51) Int Cl.:
***B01F 3/02*** *(2006.01)*   ***B01F 3/08*** *(2006.01)*
***B01F 5/06*** *(2006.01)*   *B01F 15/00* *(2006.01)*

(21) Application number: **07021594.2**

(22) Date of filing: **07.11.2007**

(54) **Method and apparatus for mixing two or more fluid streams**

Verfahren und Vorrichtung zum Mischen zweier oder mehrerer Fluidströme

Procédé et appareil de mélange de deux ou plusieurs flux fluides

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.12.2006 DK 200601621**

(43) Date of publication of application:
**11.06.2008 Bulletin 2008/24**

(73) Proprietor: **Haldor Topsoe A/S
2800 Lyngby (DK)**

(72) Inventors:
• **Hansen, Tommy
3080 Tikøb (DK)**
• **Skjøth-Rasmussen, Martin Skov
2980 Kokkedal (DK)**

(56) References cited:
**EP-A- 1 046 420    WO-A-2005/079964
CH-A- 366 518      DE-A1- 19 707 165
DE-C- 304 908      GB-A- 933 709
JP-A- 3 213 132**

EP 1 930 069 B1

## Description

## BACKGROUND OF THE INVENTION

### 1 Field of the Invention

The invention relates to thorough mixing of two or more fluid streams.

The invention is specifically directed to a method and an apparatus for mixing two or more fluid streams, where variations in the flow rates occur.

The invention is especially useful in catalytic partial oxidation reactors, where hydrocarbon feed and oxidant feed must be very thoroughly mixed. This is important for obtaining optimal reaction in a subsequent catalyst bed.

### 2 Description of related Art

Fluid mixers are known in the art, also those for mixing a hydrocarbon with an oxidant prior to a catalytic partial oxidation.

For this purpose Sulzer Chemtech has developed a static mixer, which they show in a brochure available on the internet. The mixer comprises a tube with blades on the inner surface or on a shaft installed in the tube and the blades create a mixing, turbulent flow pattern.

In US patent No. 5,026,946 a mixer is shown, where a hydrocarbon is mixed with an oxidant. The mixer comprises two concentric tubes; the inner tube is closed in one end and is equipped with small holes. The hydrocarbon flows in the annular space between the tubes, and the oxidant flows from the inner tube out through the holes and is mixed with the hydrocarbon.

US patent No. 5,112,527 discloses a process for autothermal reforming of lower alkanes such as natural gas. In order to homogeneously blend the gaseous alkanes, steam and oxygen containing gas a static mixer is installed in an inlet channel. Efficiency of mixing and created pressure drop in the static mixer, however, will vary with the amount of gas flowing through the static mixer.

Another mixer is described by JP 3213132, where the gases are mixed by a rotating shaft in a housing. The surface of the shaft and inner surface of the housing both are in a shape of a screw groove. This pushes the gases forward in a flow passage with flow areas having a certain maximum and minimum size.

A mixer/diffuser disclosed in US patent No. 6,092,921 comprises an inlet chamber, an expander and an outlet chamber, where a body is inserted in the expander creating a conical, annular flow passage.

An apparatus for mixing and grinding is disclosed in DE 304 908. A two phase liquid, an emulsion, alternately flows through a conic annulus and a vertical annulus a number of times. To avoid excessive erosion of the first conical annulus, this has a bigger flow area than the following ones, which again have decreasing flow areas. At different capacities of the apparatus, these flow areas are changed by adjusting the distances between outer wall of the conical annuli. This must be done by interrupting the operation and opening the apparatus for adjusting these distances.

Thorough mixing of two or more gases or liquids inevitably costs pressure drop. Common to the mixing devices of prior art is that, when flow rate increases during operation, the created pressure drop increases considerably. And when the flows decrease the mixing quality decreases as well.

It is therefore the object of the present invention to provide a simple method and apparatus for mixing, which thoroughly mix two or more fluids, and equally thoroughly at varying flow rates, but without variations in the created pressure drop across the mixer and in mixing efficiency.

## SUMMARY OF THE INVENTION

Pursuant to the above object the invention relates to a method according to claim 1 for mixing two or more fluid streams, where the streams are combined in an inlet chamber and thereafter repeatedly accelerated and decelerated in one or more stages. A value of a maximum linear velocity of the accelerated combined streams is maintained in each step within a range of mass flow rates of the feed streams by adjusting area of smallest flow passage during a mixing operation.

The invention also provides apparatus according to claim 3 for mixing two or more gaseous or liquid streams, comprising a body with a seat; a spindle with a plug, which is installed in the seat and the seat and the plug have a plurality of conical surfaces forming the same plurality of conical annuli. The spindle is able to move the plug in an axial direction in the seat during the mixing operation. The spindle and the plug may comprise a flow passage.

A preferred embodiment of the invention provides an apparatus for mixing two or more gaseous or liquid feed streams and comprises a body and a movable spindle connected to a tube plug coaxially installed in the body. Near the spindle the tube plug is perforated, and it is open in the other end. The feed streams enter the tube plug through the perforation holes. A cage with nozzles surrounds the tube plug, a plurality of annular mixing elements surround the cage, and the mixing elements are parted from each other. The cage and the mixing elements are closed at the end, where the tube plug end is open.

The invention ensures thorough mixing of fluids at a constant pressure drop for a range of flow rates.

## BRIEF DESCRIPTION OF THE DRAWINGS

FIG 1 is a cross-section of one embodiment of the mixing device of the invention.

FIG 2 is a cross-section of a mixing device of the invention installed at the inlet of a reactor.

FIG 3 is a diagram of a reactor with a feed gas mixed and controlled according to the invention.

FIG 4 is a cross-section of another embodiment of the mixing device of the invention.

FIG 5 is a cross-section of yet another embodiment of the mixing device of the invention.

## DETAILED DESCRIPTION OF THE INVENTION

Mixing of gasses and/or liquids takes place in all processes, and performance of equipment installed downstream of such mixing is dependent of efficiency of the mixing.

One example is $H_2/CO$ containing synthesis gas production from a hydrocarbon, steam and an oxidant, which can be air, oxygen or a mixture, i.e. enriched air. The raw materials are mixed and thereafter catalytically oxidised. Further, it is important to avoid reaction between oxygen and hydrocarbon before the gas mixture enters a catalyst bed.

To obtain an optimal reaction in the catalyst bed, it is very important that the gas streams are thoroughly mixed before entering the catalyst bed.

An efficient way of mixing two or more gases or liquids is to let the streams, which just are led together, accelerate and decelerate a number of times and with a sufficient high maximum velocity, which helps to prevent reaction upstream of the catalyst bed. When the accelerated streams are decelerated in a subsequent chamber, eddies are created in the chamber and the streams are mixed.

This pressure drop is rather high compared to pressure drops created by other piping elements and reactor internals in petrochemical plants.

It is important to obtain a thorough mixing at all capacities of a plant without creating excessive pressure drops at high capacities, and without loosing mixing efficiency at low capacities of a plant.

The invention provides a method and an apparatus for mixing two or more fluids by repeated acceleration and deceleration and at a constant pressure drop for a wide range of capacities. This is obtained by changing the flow area of the narrow flow passage in the acceleration part of the mixer. In this way, the fast linear velocity of the fluid, the created pressure drop and the mixing efficiency are maintained constant for a wide range of flow rates.

It has now been found that this is obtained by a mixer comprising a seat and a spindle with a plug, where the surface of the seat and of the plug form annuli and chambers, through which the fluids flow. The annuli are conical, which enables the spindle to be moved up and down (when vertically installed) resulting in adjusted flow areas.

The seat comprises holes between chambers, which are bore flow connections between chambers. This forces the gases in the chambers to change flow direction 90° a number of times, typically 3-5 times, depending of the specific design.

The spindle and the plug can be bored, so a liquid can flow in this passage and out through a spray nozzle mounted on the plug.

Alternatively, the movable plug can be a tube, with holes in the end at the spindle end and the other end being open. Instead of a seat, the tube plug is surrounded by a cage, which is surrounded by horizontal gas mixing elements. The elements are separated from each other, and thereby the feed gasses only flow through the elements and the part of the cage, which are not blinded off by the tube plug.

This keeps the maximum linear velocity and thereby also the desired pressure drop and the eddy formation constant, which is important for good mixing of streams with varying flow rates.

A mixer will be designed to obtain the best mixing at a certain pressure drop, which then has to be kept constant.

When designing a gas-gas mixer with annular flow passage between seat and plug, the relation between flow rates and flow area of an annulus is expressed as

$$R_1 = \frac{F}{D_{seat}^2 - D_{plug}^2} * \frac{P_{ref}}{P} * \frac{T}{T_{ref}}$$

where

$F$ is total gas flow rate in $Nm^3/sec$

$D_{seat}$ and $D_{plug}$ are inner diameter of seat and diameter of plug at the same position in an annulus in m.

$P$ is pressure in MPa in the mixer and $P_{ref}$ is 3.0 MPa,

$T$ is temperature in K in the mixer and $T_{ref}$ is 473.15 K.

$R_1$ must range between $1*10^6$ and $1*10^8$ $Nm^3/sec/m^2$ preferably between $5*10^6$ and $2*10^7$ $Nm^3/sec/m^2$.

The relation between the combined feed flow rate and the cross sectional area of the holes between the chambers in the seat is expressed by ratio $R_2$ which can be expressed as

$$R_2 = \frac{F}{n * D_{hole}^2} * \frac{P_{ref}}{P} * \frac{T}{T_{ref}}$$

where

$F$ is total gas flow rate in $Nm^3/sec$,

$n$ is number of holes,

$D_{hole}$ is diameter of one hole between chambers in m,

$P$ is pressure in MPa in the mixer and $P_{ref}$ is 3.0 MPa,

$T$ is temperature in K in the mixer and $T_{ref}$ is 473.15 K.

$R_2$ must range between $5*10^5$ and $1*10^7$ $Nm^3/sec/m^2$ preferably $1*10^6$ and $2*10^6$ $Nm^3/sec/m^2$.

The mixer can be installed anywhere a thorough mixing of two or more fluids is required. In a CPO reactor it is convenient to install the mixer in an inlet flange of the reactor. The mixer is further described by the drawings.

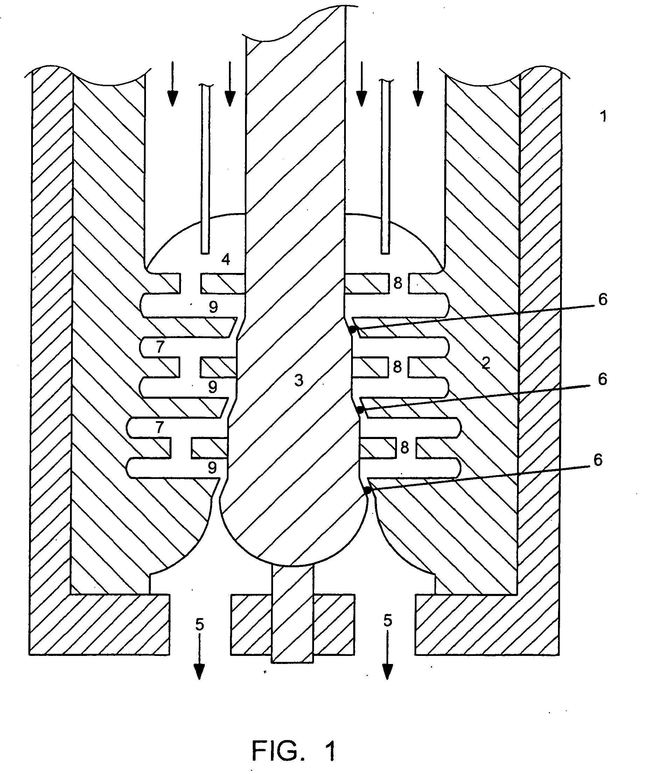

One embodiment of the invention is shown by Fig 1. Mixer 1 comprises a seat 2 and a plug 3; the fluids to be mixed enter through two annular channels as indicated by arrows, from where they flow to an inlet chamber, which optionally is filled by a porous medium 4, from where they flow through holes, bore flow connections, 8 to chamber 9. The mixed fluids leave through outlets 5. After having entered the chamber 9, the fluids flow through the first of the annuli 6, where the fluids accelerate between the plug 3 and the seat 2. From the annulus the fluids flow with high velocity out into one of chambers 7, where they are decelerated and forced to change directions, first 90° from vertical to horizontal into the chamber, and then from horizontal to vertical to pass through holes 8 to chamber 9. In chamber 9 eddies are formed resulting in additional, thorough mixing. Then the direction changes from vertical to horizontal and then again to vertical for flowing into a subsequent annulus 6. Thereby, turbulence and proper mixing is created in the chambers 7 and 9.

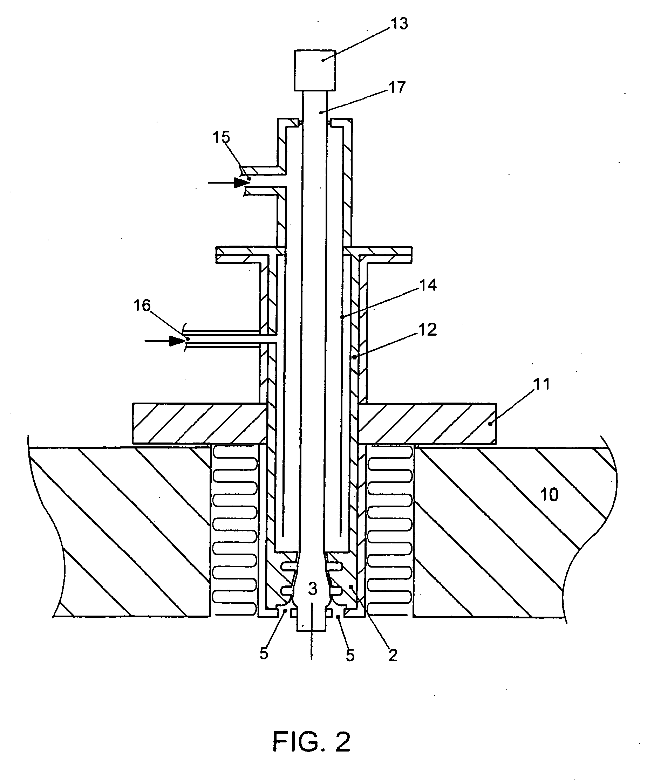

Installation of one embodiment of the mixer is shown on Fig 2. The mixer is installed at a top inlet 10 of a catalytic partial oxidation, CPO, reactor, to which a body 11 is connected. In the body 11 a guide 12 is inserted and a spindle 17 of the plug 3 runs through the body 11 and the guide 12 and can be moved up and down by actuator 13, which thereby alters flow area between the seat 2 and the plug 3. Between the spindle 17 and the guide 12 an inner tube 14 is installed.

The oxidant/steam feed enters the mixer through oxidant inlet 15 and flows between the spindle 17 and the inner tube 14, while the hydrocarbon/steam feed enters through hydrocarbon inlet 16 and flow between the inner tube 14 and the guide 12. These gases flow together at the acceleration/deceleration part of the mixer, downstream of which the mixed gas leaves the mixer through outlet 5 and enters the CPO reactor.

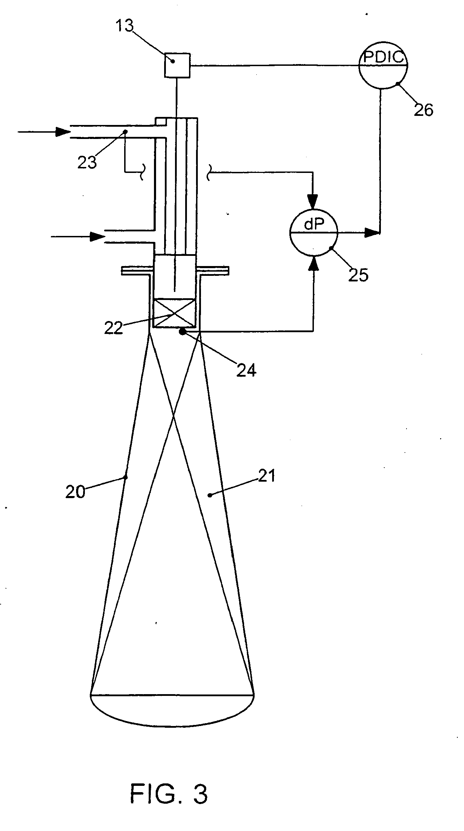

The performance of the mixer during operation is shown on Fig. 3. In the CPO reactor 20 catalyst bed 21 is installed. The mixed gas flows through flame arrestor 22 to the space in the CPO reactor inlet of the catalyst bed 21.

A pressure gauge 23 is installed at the oxidant inlet pipe and another pressure gauge 24 at the outlet of the mixer. The signals from 23 and 24 are received by pressure measuring instrument 25, which calculates the pressure drop across the mixer and sends this signal to controller 26. Controller 26 keeps the pressure drop constant by sending a signal to actuator 13, as the actuator moves the spindle up or down adjusting the flow area of the annuli. This ensures the constant pressure difference an d the optimal mixing at a wide range of operating capacities.

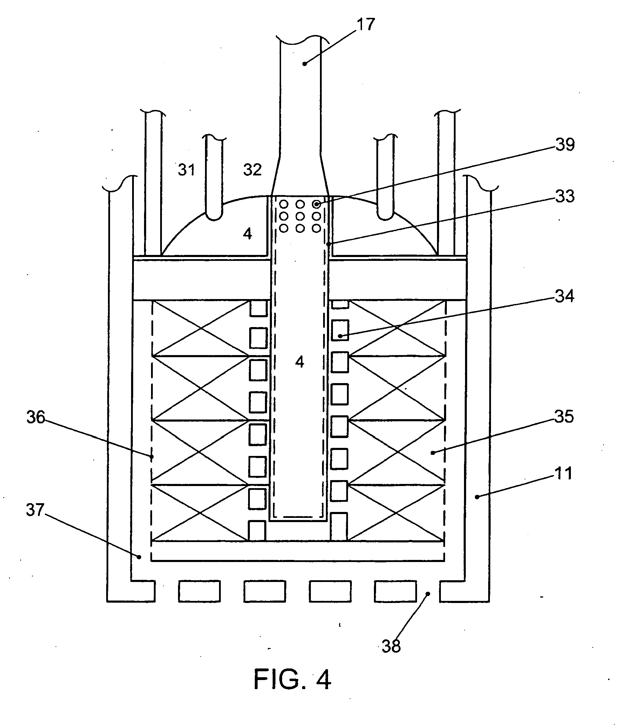

In Fig. 4 another embodiment of mixer is shown. In this, the mixer 1 comprises body 11 and spindle 17, which is connected to a tube plug 33. Near the spindle 17 the tube plug 33 is equipped with perforation holes 39, at the other end the tube plug 33 is open. Optionally, upstream of the perforation holes 39 and inside the tube plug 33 a porous material 4 is installed. The tube plug 33 is coaxially surrounded by a cage 34, i.e. a tube with nozzles. The space between tube plug and cage is just so wide that the tube plug can slide in the cage. The nozzles can be arranged in a pre-determined pattern, such as a helical pattern. Around cage 34, horizontal, annular wire mesh mixing elements 35 are placed, which thereby are horizontally isolated from each other. The elements 35 are surrounded by a perforated tube 36.

The cage and the mixing elements are closed in the lower end where the tube plug is open. The height of the cage 34 when vertically installed - and the height of non-perforated part of the tube plug 33 are substantially the same. Thereby, the non-perforated part of the tube plug 33 is able to block off zero, some or all of the nozzles, when positioned in the upper, a middle or the lower position, respectively.

Further, the total area of the cage nozzles is considerably smaller than flow area of any other flow passage of the mixer.

The oxidant/steam inlet stream enters the mixer from inlet annulus 32 and the hydrocarbon/steam inlet stream enters from the surrounding inlet annulus 31. Both streams flow into a porous material 4, from where they enter the tube plug 33 through the perforation holes 39. After the gas streams are mixed, the mixed gas flows from the perforated tube 36 into an outlet channel 37 and leaves the mixer 1 through outlet holes 38.

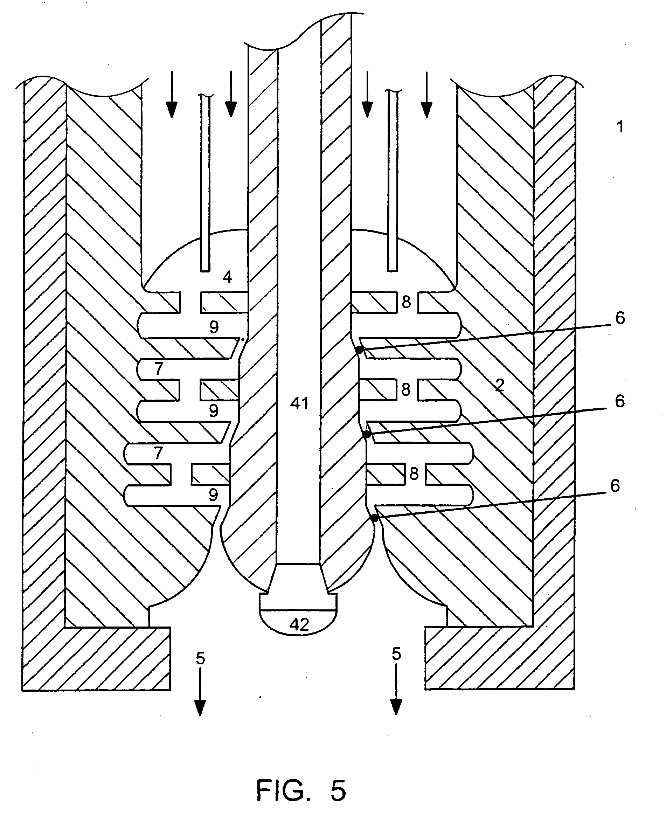

A further use and embodiment of the mixer with annular gas flow passages is shown in Fig. 5. In this embodiment an internal liquid flow passage 41 is bored in the spindle and the plug 3, and a liquid can thereby flow in this internal liquid flow passage. At the outlet of the internal liquid flow passage a spray nozzle 42 is connected to the plug 3, so a spray of liquid is introduced with high velocity into the mixed gas. An example of liquid in the channel is a liquid hydrocarbon.

The invention is useful for mixing two or more fluid streams especially for streams, where considerable variations in flow rates occur and proper mixing is important.

An example, where thorough mixing is required, is the above mentioned CPO process. This process is an important process all over the world as $H_2/CO$ synthesis gas is feed gas for numerous processes, of which some examples are hydrogen production, methanol production, formaldehyde production.

## EXAMPLES

One embodiment of the invention is described below. A mixer according to the invention often will be installed with the spindle in vertical position, which is assumed below.

The below described embodiment is a mixer of a size suitable for a pilot plant, for demonstrating a design of a commercial CPO reactor. The invention is not in any way limited to small sizes of reactors and mixers.

The mixer is 40 - 80 preferably 55 - 65 mm high and outer diameters are 40 - 80 preferably 55 - 65 mm.

The spindle is 100 - 400 preferably 200 - 300 mm long, the plug is 40 - 80 preferably 55 - 65 mm high and together with the seat it forms 1 - 5 preferably 2 - 4 annular spaces.

The space of the annuli are 0.25 - 1 preferably 0.6 - 0.7 mm. In a mixer with three annuli the three conical parts of the seat have min/max diameters 9.3 - 12.3 mm, 12.3 - 14.0 mm and 14.0 - 18.3 mm, respectively.

The conical surfaces form an angel of 10° - 30° preferably 17.4° - 17.6° with the axis of the spindle.

The chambers between the annuli have an outer diameter of 30 - 55 preferably 35 - 45 mm, and a height of 3 - 7 preferably 4 - 6 mm, and the holes forming the bore hole connections are 2 - 6 preferably 3 - 5 mm high with a diameter of 3 - 8 preferably 5 - 7 mm.

During the operation the spindle can move 5 - 10 preferably 6 - 8 mm up or down.

Inlet for gases to be mixed comprises 2 - 9 preferably 3 - 5 holes each with diameter 3 - 8 preferably 5 - 7 mm; and outlet for the mixed gas comprises 2 - 9 preferably 5 - 7 holes each with diameter 3 - 8 preferably 5 - 7 mm.

This embodiment is suitable for mixing a hydrocarbon with an oxidant, where the combined gaseous streams form a flow of 170 - 190 preferably 175 - 185 $Nm^3/h$ with a molecular weight of 2 - 50 preferably 21 - 23 gram/mole at 20 - 650 preferably 190 - 210°C, and the mixing takes place at 0.5 - 4.5 preferably 2.9 - 3.1 MPa.

Another embodiment of the invention is a mixer of industrial size.

This mixer is 400 - 800 preferably 550 - 650 mm high and outer diameters are 400 - 800 preferably 550 - 650 mm.

The spindle is 100 - 700 preferably 200 - 500 mm long, the plug is 400 - 800 preferably 550 - 650 mm high and together with the seat it forms 1 - 6 preferably 2 - 4 annular spaces.

The spaces of the annuli are 2.5 - 10 preferably 5.5 - 7.5 mm. The conical part of the seat has middle diameters 50 - 200 preferably 95 - 180 mm.

The conical surfaces form an angel of 10° - 45° preferably 17.4° - 17.6° with the axis of the spindle.

The chambers between the annuli have an outer diameter of 300 - 550 preferably 350 - 450 mm, and a height of 30 - 70 preferably 40 - 60 mm, and the holes are 20 - 60 preferably 30 - 50 mm high with a diameter of 30 - 80 preferably 50 - 70 mm.

During the operation the spindle can move 10 - 100 preferably 60 - 80 mm up or down.

Inlet for gases to be mixed comprises 2 - 9 preferably 3 - 5 holes, each with diameter 30 - 90 preferably 50 - 70 mm; and outlet for the mixed gas comprises 2 - 9 preferably 5 - 7 holes each with diameter 30 - 90 preferably 50 - 70 mm.

This embodiment is suitable for mixing a hydrocarbon with an oxidant, where the combined gaseous streams form a flow of 17000 - 19000 preferably 17500 - 18500 $Nm^3/h$ with a molecular weight of 2 - 50 preferably 21 - 23 gram/mole at 20 - 650 preferably 190 - 210°C, and the mixing takes place at 0.5 - 4.5 preferably 2.9 - 3.1 MPa.

One embodiment of the cage mixer is a mixer, where the body has an outer diameter of 60 - 65 preferably 61 - 63 mm, and 3 - 8 preferably 4 - 6 mixing elements are installed, each having a height of 5 - 15 preferably 8 - 12 mm, an outer diameter of 30 - 40 preferably 35 - 37 mm and an inner diameter of 18 - 22 preferably 19 - 21 mm. The cage inside the elements thus has a diameter of 18 - 22 preferably 19 - 21 mm and each element is equipped with 3 - 10 preferably 4 - 8 nozzles with a size of 1 - 5 preferably 1 - 3 mm. The nozzles are arranged in a helical pattern. Near the spindle the tube plug has a number of rows with holes, each row has 4 - 10, preferably 6 - 8, holes in a 6 - 14 preferably 8 - 12 mm square pitch and with a hole diameter of 3 - 7 preferably 4 - 6 mm.

The non-perforated part of the tube plug has a length/height of 35 - 75 preferably 38 - 60 mm.

This embodiment is useful for a total gas stream of 170 - 190 preferably 175 - 185 $Nm^3/h$ with molecular weight 2 - 50 preferably 21 - 23 gram/mole at 0.5 - 4.5 preferably 2.9 - 3.1 MPa and 20 - 650 preferably 190 - 210°C.

## Claims

1. A method for mixing two or more fluid streams **characterised in that**
   the streams are combined in an inlet chamber and thereafter repeatedly accelerated and decelerated in one or more stages,
   and
   a value of a maximum linear velocity of the accelerated combined fluid stream is maintained in each step within a range of mass flow rates of the streams by adjusting area of smallest flow passage during a mixing operation.

2. A method according to claim 1, wherein additional mixing is obtained by 90 degree change in flow direction of the decelerated combined streams one or more times, preferably 3 - 5 times in each stage.

3. An apparatus for mixing two or more gaseous or liquid streams according to claims 1 or 2 **characterised in that** it comprises

   a body (11);
   a seat (2);
   a spindle with a plug (3);
   an inlet chamber;
   the plug (3) installed inside the seat (2)
   the seat (2) and the plug (3) have a plurality of conical surfaces forming the same plurality of conical annuli (6);
   the seat (2) is shaped to form two chambers (7,9) between two annuli (6) and with a bore flow connection (8) between the said two chambers (7,9); and
   the spindle is able to move the plug (3) in an axial direction in the seat (2) during the mixing operation.

4. An apparatus according to claim 3, wherein a porous medium (4) is installed in the inlet chamber.

5. An apparatus according to claim 3, and 4, wherein a relationship between a gas flow rate and a cross sectional flow area of an annulus (6) is expressed as

$$R_1 = \frac{F}{D_{seat}^{\;2} - D_{plug}^{\;2}} * \frac{P_{ref}}{P} * \frac{T}{T_{ref}}$$

where
**F** is total gas flow rate in Nm$^3$/sec
**$D_{seat}$ and $D_{plug}$** are inner diameter of seat (2) and diameter of plug (3) at the same position in an annulus (6) in m,
**P** is pressure in MPa in the mixer (1) and $P_{ref}$ is 3.0 MPa,
**T** is temperature in K in the mixer (1) and $T_{ref}$ is 473.15 K.
**$R_1$** is in a range between $1*10^6$ and $1*10^8$ Nm$^3$/sec/m$^2$ preferably between $5*10^6$ and $2*10^7$ Nm$^3$/sec/m$^2$; and
wherein a relation between the gas flow rate and a cross sectional flow area of holes (8) forming the bore connection between the chambers (7,9) is expressed as

$$R_2 = \frac{F}{n * D_{hole}^{\;2}} * \frac{P_{ref}}{P} * \frac{T}{T_{ref}}$$

where
**F** is total gas flow rate in Nm$^3$/sec
**n** is number of holes (8),
**$D_{hole}$** is diameter of holes (8) between chambers (7,9) in m,
**P** is pressure in MPa in the mixer (1) and $P_{ref}$ is 3.0 MPa,
**T** is temperature in K in the mixer (1) and $T_{ref}$ is 473.15 K; and
**$R_2$** is in a range between $5*10^5$ and $1*10^7$ Nm$^3$/sec/m$^2$ preferably $1*10^6$ and $2*10^6$ Nm$^3$/sec/m$^2$.

6. An apparatus according to claims 3, 4 and 5, wherein the spindle and plug (3) further comprise an internal liquid flow passage (41) and a spray nozzle (42) connected to an outlet end of the internal liquid flow passage (41).

7. An apparatus for mixing two or more gaseous or liquid feed streams according to claims 1, or 2 **characterised in that** it comprises

   - a body (11);
   - a movable spindle (17) connected to a tube plug (33) coaxially installed in the body (11); where
   - the tube plug (33) being perforated at an end adjacent to the spindle (17) and open in other end; and
   - the feed streams enter the tube plug (33) through perforation holes (39);
   - a cage (34) with nozzles surrounding the tube plug (33) and substantially without space from the tube plug (33); where
   - the height of the cage (34)- when vertically installed - and the height of non-perforated part of the tube plug (33) being substantially the same; and
   - the non-perforated part of the tube plug (33) being able to block zero, some or all of the nozzles, when positioned in upper, a middle or lower position; and
   - a plurality of annular mixing elements (35) surrounding the cage (34); where
   - the mixing elements (35) being isolated from each other;
   - the cage (34) and the mixing elements (35) being closed at the end, where the tube plug end is open; and
   - total flow area of the cage nozzles is considerably smaller than flow area of any other flow passage of the mixer (1).

8. An apparatus according to claim 7, wherein a porous medium (4) is installed upstream of the perforation holes (39) and a porous medium (4) is installed in the tube plug (33).

9. An apparatus according to claims 3, 4, 5, 6, 7, and 8, wherein
the feed streams are a hydrocarbon stream, a water vapour stream and an oxidant stream.

10. An apparatus according to claim 9, wherein the mixed stream form a feed stream for a catalytic partial oxidation process.


**Patentansprüche**

1. Verfahren zum Mischen zweier oder mehrerer Fluidströme,
   **dadurch gekennzeichnet, dass**
   die Ströme in einer Einlasskammer zusammengeführt und danach in einer oder mehreren Stufen wiederholt beschleunigt und entschleunigt werden und ein Wert einer maximalen linearen Geschwindigkeit der beschleunigten, zusammengeführten Ströme in jedem Schritt innerhalb eines Bereichs der Massendurchflussmenge der Ströme gehalten wird, indem während eines Mischvorgangs die Fläche des schmalsten Strömungskanals angepasst wird.

2. Verfahren gemäß Anspruch 1, wobei durch ein einfaches oder mehrfaches, vorzugsweise ein drei- bis fünffaches, um 90° Umlenken der Strömungsrichtung der entschleunigten, zusammengeführten Ströme ein weiteres Mischen erreicht wird.

3. Vorrichtung zum Mischen zweier oder mehrerer gasförmiger oder flüssiger Ströme gemäß Anspruch 1 oder 2,
   **dadurch gekennzeichnet, dass** sie umfasst:

   einen Körper (11)
   einen Sitz (2)
   eine Spindel mit einem Stopfen (3);
   eine Einlasskammer;
   der Stopfen (3) ist in dem Sitz (2) eingebaut
   der Sitz (2) und der Stopfen (3) haben eine Vielzahl kegelförmige Oberflächen,
   welche dieselbe Anzahl kegelförmige Ringspalte (6) bilden;
   der Sitz (2) ist so ausgebildet, dass er zwei Kammern (7,9) zwischen zwei Ringspalten (6) bildet und weist eine Vorlaufanschlussbohrung zwischen den zwei Kammern (7,9) auf, und
   die Spindel kann den Stopfen (3) während des Mischvorgangs in axialer Richtung in dem Sitz (2) bewegen.

4. Vorrichtung gemäß Anspruch 3, wobei ein poröses Medium (4) in der Einlasskammer eingebaut ist.

5. Vorrichtung gemäß Anspruch 3 und 4, wobei eine Beziehung zwischen der Gasdurchflussmenge und einem Durchlassquerschnitt eines Ringspaltes (6) ausgedrückt wird als:

$$R_1 = \frac{F}{D_{seat}^2 - D_{plug}^2} * \frac{P_{ref}}{P} * \frac{T}{T_{ref}}$$

worin
F die Gesamtgasdurchflussmenge in $Nm^3/sec$ ist
$D_{seat}$ und $D_{plug}$ die inneren Durchmesser von Sitz (2) und Stopfen (3) an derselben Stelle in einem Ringspalt (6) in m sind,
P der Druck in MPa in dem Mischer (1) und $P_{ref}$ 3,3 MPA ist,
T die Temperatur in K in dem Mischer und $T_{ref}$ 473,15 K ist,
$R_1$ im Bereich zwischen $1*10^6$ und $1*10^8$ $Nm^3/sec/m^2$, vorzugsweise zwischen $5*10^6$ und $2*10^7$ $Nm^3/sec/m^2$, ist; und
wobei eine Beziehung zwischen der Gasdurchflussmenge und einem Durchgangsquerschnitt von Öffnungen (8), die die Vorlaufanschlussbohrung zwischen den Kammern bilden, ausgedrückt ist als

$$R_2 = \frac{F}{n * D_{hole}^2} * \frac{P_{ref}}{P} * \frac{T}{T_{ref}}$$

worin
F die Gesamtgasdurchflussmenge in $Nm^3/sec$ ist
n die Anzahl der Öffnungen (8) ist,
$D_{hole}$ der Durchmesser der Öffnungen (8) zwischen den Kammern (7, 9) in m ist,
P der Druck in MPa in dem Mischer (1) und $P_{ref}$ 3,3 MPa ist,
T die Temperatur in K in dem Mischer und $T_{ref}$ 473,15 K ist; und
$R_2$ im Bereich zwischen $5*10^5$ und $1*10^7$ $Nm^3/sec/m^2$, vorzugsweise zwischen $1*10^6$ und $2*10^5$ $Nm^3/sec/m^2$, ist.

6. Vorichtung gemäß Ansprüchen 3, 4 und 5, wobei die Spindel und der Stopfen (3) außerdem einen internen Flüssigkeitsströmungskanal (41) und eine Sprühdüse (42) umfassen, die an einem Auslassende des internen Flussigkeitsströmungskanals (41) angeschlossen ist.

7. Vorrichtung zum Mischen zweier oder mehrerer gasförmiger oder flüssiger Zufuhrströme gemäß Anspruch 1 oder 2,

**dadurch gekennzeichnet, dass** sie umfasst

- einen Körper
- eine bewegliche Spindel (17), die mit einem Rohrstopfen (33) koaxial in dem Körper (11) eingebaut ist, wobei
- der Rohrstopfen (33) an einem an der Spindel (17) anliegenden Ende perforiert und an dem anderen Ende offen ist; und
- die Zufuhrströme durch die Perforationsöffnungen (39) in den Rohrstopfen (33) eintreten;
- ein Käfig (34) mit Düsen den Rohrstopfen (33) im wesentlichen ohne Zwischenraum umgibt; wobei
- die Höhe des Käfigs (34) - im Falle eines senkrechten Einbaus - und die Höhe des nicht perforierten Teils des Rohrstopfens (33) im wesentlichen gleich sind; und
- der nicht perforierte Teil des Rohrstopfens (33) in der Lage ist, keine, einige oder alle der Düsen zu blockieren, wenn er in der oberen, mittleren oder unteren Stellung angeordnet ist; und
- eine Vielzahl ringförmiger Mischelemente (35), den Käfig umgeben; wobei
- die Mischelemente (35) voneinedaer getrennt werden können;
- der Käfig (34) und die Mischelemente (35) an dem Ende, an welchem der Rohrstopfen offen ist, geschlossen sind; und
- der Gesamtdurchflussquerschnitt der Käfigdüsen wesentlich kleiner als der Durchflussquerschnitt irgendeines anderen Strömungskanals des Mischers (1) ist.

**8.** Vorrichtung gemäß Anspruch 7, wobei ein poröses Medium (4) stromaufwärts von den Perforationsöffnungen (39) eingebaut ist und ein poröses Medium (4) in dem Rohrstopfen (33) eingebaut ist.

**9.** Vorrichtung gemäß Anspruch 3, 4, 5, 6, 7, und 8, wobei die Zufuhrströme ein Kohlenwasserstoffstrom, ein Wasserdampfstram und ein Oxidationsmittelstrom sind.

**10.** Vorrichtung gemäß Anspruch 9, wobei die gemischten Ströme einen Zufuhrstrom für ein katalytisches Teiloxidationsverfahren bilden.

**Revendications**

**1.** Procédé de mélange de deux flux fluides ou plus **caractérisé en ce que**
les flux sont combinés dans une chambre d'entrée et ensuite de façon répétée accélérés et décélérés en une ou plusieurs étapes,
et
une valeur d'une vélocité linaire maximum du flux de fluides combinés accéléré est maintenue à chaque étape à l'intérieur d'une plage de débits massiques des flux en ajustant une section du plus petit passage de flux pendant une opération de mélange.

**2.** Procédé selon la revendication 1, dans lequel un mélange additionnel est obtenu par un changement de 90 degrés du sens d'écoulement des flux combinés décélérés une ou plusieurs fois, préférablement 3 à 5 fois à chaque étape.

**3.** Appareil pour mélanger deux flux gazeux ou liquides ou plus selon les revendications 1 ou 2 **caractérisé en ce qu'**il comprend
un corps (11) ;
un siège (2) ;
une tige avec un bouchon (3);
une chambre d'entrée ;
le bouchon (3) installé à l'intérieur du siège (2) ;
le siège (2) et le bouchon (3) ont une pluralité de surfaces coniques formant la même pluralité d'anneaux coniques (6) ;
le siège (2) est formé de façon à former deux chambres (7, 9) entre deux anneaux (6) et avec une connexion d'écoulement alésée (8) entre lesdites deux chambres (7, 9) ; et
la tige est apte à déplacer le bouchon (3) dans un sens axial dans le siège (2) pendant l'opération de mélange,

**4.** Appareil selon la revendication 3, dans lequel un support poreux (4) est installé dans la chambre d'entrée.

**5.** Appareil selon la revendication 3, et as, dans lequel une relation entre un débit de gaz et une section transversale d'écoulement d'un anneau (6) est exprimée comme

$$R_i = \frac{F}{D_{seat}{}^2 - D_{plug}{}^2} * \frac{P_{ref}}{P} * \frac{T}{T_{ref}}$$

où
F est le débit total de gaz en $Nm^3/s$
$D_{seat}$ et $D_{plug}$ sont le diamètre intérieur du siège (2) et le diamètre du bouchon (3) à la même position dans un anneau (6) en m,
P est la pression en MPa dans le mélangeur (1) et $P_{ref}$ est 3,0 MPa,
T est la température en K dans le mélangeur (1) et $T_{ref}$ est 473,15 K,
$R_1$ est une plage entre $1*10^6$ et $1*10^8$ $Nm^3/s/m^2$, préférablement entre $5*10^6$ et $2*10^7$ $Nm^3/s/m^2$; et
dans laquelle une relation entre le débit de gaz et une section transversale d'écoulement de trous (8) formant la connexion alésée entre les chambres (7, 9) est exprimée comme

$$R_2 = \frac{F}{n * D_{hole}^{2}} * \frac{P_{ref}}{P} * \frac{T}{T_{ref}}$$

où

F est le débit total de gaz en $Nm^3/s$

n est le nombre de trous (8),

$D_{hole}$ est le diamètre de trous (8) entre les chambres (7, 9) en m,

P est la pression en MPa dans le mélangeur (1) et $P_{ref}$ est 3,0 MPa,

T est la température en K dans le mélangeur (1) et $T_{ref}$ est 473,15 K,

$R_2$ est une plage entre $5*10^5$ et $1*10^7$ $Nm^3/s/m^2$, préférablement $1*10^6$ et $2*10^6$ $Nm^3/s/m^2$.

6. Appareil selon les revendications 3, 4 et 5, dans lequel la tige et le bouchon (3) comprennent en outre un passage interne d'écoulement de liquide (41) et une buse de pulvérisation (42) connectée à une extrémité de sortie du passage interne d'écoulement de liquide (41).

7. Appareil pour mélanger deux flux d'alimentation gazeux ou liquides ou plus selon les revendications 1, ou 2

   **caractérisé en ce qu'**il comprend

   - un corps (11) ;
   - une tige mobile (17) connectée à un bouchon de tube (33) coaxialement installé dans le corps (11) ; où
   - le bouchon de tube (33) étant perforé à une extrémité adjacente à la tige (17) et ouvert dans l'autre extrémité ; et
   - les flux d'alimentation pénètrent dans le bouchon de tube (33) à travers des trous de perforation (39) ;
   - une cage (34) avec des buses entourant le bouchon de tube (33) et substantiellement sans espace à partir du bouchon de tube (33) ; où
   - la hauteur de la cage (34) - lorsqu'elle est installée verticalement - et la hauteur de la partie non perforée du bouchon de tube (33) étant substantiellement la même ; et
   - la partie non perforée du bouchon de tube (33) étant apte à bloquer zéro, certaines ou toutes les buses, lorsqu'elle est positionnée dans une position supérieure, médiane ou inférieure ; et
   - une pluralité d'éléments de mélange annulaires (35) entourant la cage (34) ; où
   - les éléments de mélange (35) étant isolés les uns des autres ;
   - la cage (34) et les éléments de mélange (35) étant fermés à l'extrémité, où l'extrémité du bouchon de tube est ouverte ; et
   - la section totale d'écoulement des buses de cage est considérablement plus petite que la section d'écoulement de tout autre passage d'écoulement du mélangeur (1).

8. Appareil selon la revendication 7, dans lequel un support poreux (4) est installé en amont des trous de perforation (39) et un support poreux (4) est installé dans le bouchon de tube (33).

9. Appareil selon les revendications 3, 4, 5, 6, 7, et 8, dans lequel
   les flux d'alimentation sont un flux d'hydrocarbure, un flux de vapeur d'eau et un flux d'oxydant.

10. Appareil selon la revendication 9, dans lequel le flux mélangé forme un flux d'alimentation pour un procédé d'oxydation partielle catalytique.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5026946 A
- US 5112527 A
- JP 3213132 B
- US 6092921 A
- DE 304908